# EUROPÄISCHE PATENTSCHRIFT

(11) **EP 2 530 809 B1**
(45) Veröffentlichungstag und Bekanntmachung des Hinweises auf die Patenterteilung: **13.06.2018**
(21) Anmeldenummer: 12165978.3
(22) Anmeldetag: 27.04.2012
(51) Int. Cl.: H02J 9/00, G01D 21/00, H02M 1/10, G05B 19/042, G05B 19/418, G06F 1/26, H02J 1/10, H02J 13/00

(54) **Elektrische Versorgungsschaltung und Verfahren zum Bereitstellen einer Versorgungsspannung**
Electric supply circuit and method for providing a supply voltage
Commutation d'alimentation électrique et procédé de préparation d'une tension d'alimentation

(30) Priorität: 30.05.2011 DE 102011076706
(43) Veröffentlichungstag der Anmeldung: 05.12.2012
(73) Patentinhaber: Endress+Hauser Process Solutions AG, 4153 Reinach (CH)
(72) Erfinder: Fiedler, Marc, 4153 Reinach (CH); Griech, Reinhard, 79576 Weil am Rhein (DE)
(74) Vertreter: Andres, Angelika Maria

(56) Entgegenhaltungen:
- EP-A1- 2 413 532
- DE-A1-102005 058 432
- DE-A1-102007 027 902
- DE-A1-102008 054 088
- DE-A1-102008 060 764
- DE-U1-202010 017 471
- US-A- 5 387 858
- US-A1- 2003 193 363

## Beschreibung

Die Erfindung bezieht sich auf eine Anordnung und auf ein Verfahren zum Bereitstellen einer Versorgungsspannung.

Ferner bezieht sich die Erfindung auf eine Funkeinheit für eine Anlage der Prozessautomatisierungstechnik mit einer solchen Versorgungsschaltung.

Aus dem Stand der Technik ist es bspw. aus der WO 03/023536 A1, der WO 2009/060000 A1, der WO 2009063053 A1 und der EP 0940738 A2 bekannt geworden, Funkeinheiten in Anlagen der Prozessautomatisierungstechnik zur leichteren Bedienung von Feldgeräten zu verwenden. Es sind Lösungen bekannt geworden, bei denen die Feldgeräte integrierte Funkeinheiten aufweisen. Es ist aber auch bekannt geworden Feldgeräte mit Funkeinheiten nachzurüsten, so dass die Feldgeräte dann drahtlos bedient werden können.

Die US 5,387,858 A1 offenbart eine energieerhaltende, mittels Sonnenlicht aufladbare Energiequelle, welche ein hohes Maß an Zuverlässigkeit verspricht. Fällt der Spannungswert der Energiequelle unter einen vorgegebenen Spannungswert, so wird automatisch eine Backup-Batterie hinzugeschaltet. Ist die Energiequelle erneut aufgeladen, so wird die Backup-Batterie wieder getrennt.

Die DE 10 2005 058 432 A1 beschreibt eine Schaltungsanordnung und ein Verfahren zum Betrieb der Schaltungsanordnung zur Spannungsauswahl. Die Schaltungsanordnung kann hierbei selbsttätig zwischen zwei Versorgungsschaltungen umschalten.

Die DE 10 2007 027 902 A1 offenbart eine Schaltung mit mehreren Batterieanschlüssen und einem Anschlussklemmenpaar, wobei die Batterieanschlüsse und das Anschlussklemmenpaar jeweils einen Pluspol und einen Minuspol aufweisen, die Schaltung zum wählbaren Verbinden der Batterieanschlüsse mit dem Anschlussklemmenpaar vorgesehen ist. Die Schaltung weist Schaltelemente auf, die mindestens zwei Untergruppen der Batterieanschlüsse wahlweise in Serie oder in Parallelschaltung zu mindestens einer Gruppe miteinander verbinden und diese mindestens eine Gruppe mit dem Anschlussklemmenpaar verbindet.

Die Energieversorgung der Feldgeräte als auch der Funkeinheiten erfolgt dabei bspw. über eine Stromschleife, an welche ein oder mehrere Feldgeräte und/oder eine oder mehrere Funkeinheiten angeschlossen sind. Diese Stromschleifen bestehen dabei hardwaremäßig aus einer Zwei- oder Mehrleiteranordnung. Die Speisung der Stromschleifen mit elektrischer Energie erfolgt dabei bspw. über ein Speisegerät, wie bspw. ein Netzteil, das die zum Einstellen eines Stromwertes in der Stromschleife erforderliche elektrische Spannung liefert. Reicht die in der Stromschleife vorhandene elektrische Energie nicht aus, um sämtliche an der Stromschleife angeschlossenen Feldgeräte zu versorgen, ist es auch möglich, eine separate Spannungsversorgung über ein weiteres Speisegerät für einzelne Feldgeräte bzw. eine Funkeinheit vorzusehen. Zu diesem Zweck ist es bspw. aus dem Stand der Technik, bspw. der DE 102004020393 A1, bekannt geworden, eine Batterie in die Funkeinheit zu integrieren, so dass die Funkeinheit und ein ggfs. daran angeschlossenes Feldgerät nicht mit elektrischer Energie aus der Stromschleife versorgt zu werden braucht.

In industriellen Anlagen sind oftmals aufgrund der Vielzahl der eingesetzten Feldgeräte mehrere Speisegeräte erforderlich, um einerseits die Kommunikation über die Stromschleife und andererseits die Betriebsfähigkeit der daran angeschlossenen Feldgeräte zu gewährleisten. Diese Speisegeräte geben eine Versorgungsspannung aus, die zum Betreiben des jeweils angeschlossenen Feldgerätes dient. Für das Feldgerät ist aber nicht erkennbar, aus welcher Spannungsquelle die Versorgungsspannung entnommen wird bzw. in welchem Zustand sich die Spannungsquelle befindet. Daher kann das Feldgerät nicht an die Art der Spannungsquelle und/oder deren Zustand angepasst werden, um bspw. laufzeitverlängernde Betriebseinstellungen vorzunehmen.

Der Erfindung liegt daher die Aufgabe zugrunde, eine Signalisierung des Zustands und/oder der Art der Spannungsversorgung zu ermöglichen. Die Aufgabe wird erfindungsgemäß durch eine Anordnung und ein Verfahren nach den unabhängigen Ansprüchen gelöst.

Bevorzugte Ausführungsbeispiele sind in den abhängigen Ansprüchen definiert.

Aufgrund des Werts der Versorgungsspannung können seitens der Betriebselektronik Rückschlüsse über den Zustand und/oder die Art der Spannungsversorgung wie bspw. den Typ der Spannungsquelle, aus dem die Versorgungsspannung abgeleitet wird, gezogen werden. Somit ist kein separater Signalisierungskanal oder anderweitige Signalisierungs- oder Einstellungsvorrichtung notwendig, um entsprechende Informationen bzgl. der Spannungsquelle zu übertragen. Allgemein gesagt, wird die Versorgungsspannung in Abhängigkeit eines Zustands der Energieversorgung bzw. der zur Verfügung stehenden Energiequelle eingestellt, ggfs. kann auch der Betriebsmodus der Betriebselektronik bspw. einer Funkeinheit in Reaktion auf einen bestimmten Wert der Versorgungsspannung eingestellt werden.

In einer Ausführungsform der Anordnung weist die Betriebselektronik einen ersten und einen zweiten Betriebsmodus auf, und die Betriebselektronik stellt in Abhängigkeit davon, ob die Versorgungsspannung den ersten bzw. den zweiten Wert aufweist den ersten bzw. den zweiten Betriebsmodus ein. Bei dem zweiten Betriebsmodus kann es sich um einen Betriebsmodus handeln, der gegenüber dem ersten Betriebsmodus bspw. eine verringerte Leistungs- bzw. Energieaufnahme aufweist.

In einer weiteren Ausführungsform der Anordnung handelt es sich bei der ersten Spannungsquelle um eine Netzspannung, wie sie bspw. von einem Energiedienstleister in eine Stromnetz eingespeist wird. In einer weiteren Ausführungsform umfasst die Anordnung einen, insbesondere aufladbaren, Energiespeicher, welcher Energiespeicher die zweite Spannungsquelle bildet, wobei der Energiespeicher dazu dient, im Fall einer Unterbrechung der Spannungsversorgung aus der ersten Spannungsquelle, den zweiten Wert der Ausgangsspannung auszugeben.

In einer weiteren Ausführungsform der Anordnung sind der erste Wert der Versorgungsspannung und der zweite Wert der Versorgungsspannung von einem, insbesondere über einen einzigen, Ausgang der Versorgungsschaltung abgreifbar, wobei sich der erste Wert der Versorgungsspannung vom zweiten Wert der Versorgungsspannung unterscheidet. Der erste Wert und der zweite Wert der Versorgungsspannung sind dabei vorzugsweise über einen einzigen Ausgang der Versorgungsschaltung abgreifbar.

In einer weiteren Ausführungsform der Anordnung dient die Versorgungsschaltung dazu, einen dritten Wert der Versorgungsspannung, der sich von dem ersten und dem zweiten Wert der Versorgungsspannung unterscheidet, auszugeben, wenn der Energiespeicher über die erste Spannungsquelle aufgeladen wird. Bevorzugt sind der erste, der zweite und der dritte Wert der Versorgungsspannung ebenfalls über einen einzigen Ausgang der Versorgungsschaltung abgreifbar.

Eine vorteilhafte Ausgestaltung der Anordnung sieht vor, dass die Versorgungsschaltung in eine Funkeinheit, die an wenigstens ein Feldgerät anschließbar ist, integriert ist.

Eine weitere vorteilhafte Ausgestaltung der Anordnung sieht vor, dass die Versorgungsschaltung in ein Feldgerät, insbesondere in einen Sensor, einen Aktor oder eine andere prozessnahe Komponente, integriert ist.

Die Aufgabe wird ferner durch eine Funkeinheit für eine Anlage der Prozessautomatisierungstechnik, wobei die Funkeinheit eine Anordnung gemäß wenigstens einer der genannten Ausführungsformen umfasst, gelöst, wobei die Versorgungsschaltung ein Netzteil zum Anschließen an ein Stromnetz und einen Energiespeicher umfasst, und die Versorgungsschaltung in Abhängigkeit davon, ob die Spannungsversorgung über das Netzteil oder den Energiespeicher erfolgt, den ersten oder zweiten Wert der Versorgungsspannung ausgibt.

In einer Ausführungsform der Funkeinheit umfasst die Funkeinheit eine Betriebselektronik, welche Betriebselektronik dazu dient, den Wert der Versorgungsspannung zu erfassen. Die Betriebselektronik kann dabei primär der Ausführung der Funktionen der Funkeinheit, d.h. zur Ausführung einer drahtlosen Kommunikation, dienen.

Die Funkeinheit kann ferner dazu dienen, ein Feldgerät zu speisen. Dafür wird über die Betriebselektronik eine Spannung zur Speisung eines an die Funkeinheit anschließbaren Feldgerätes bereitgestellt. Somit kann über die Versorgungsspannung sowohl die Funkeinheit samt ihrer Betriebselektronik und ein an die Funkeinheit anschließbares Feldgerät betrieben werden.

In einer weiteren Ausführungsform der Funkeinheit dient die Betriebselektronik dazu, in Abhängigkeit des Werts der Versorgungsspannung einen ersten bzw. einen zweiten Betriebsmodus der Betriebselektronik einzustellen. In dem ersten Betriebsmodus kann bspw. sowohl die Betriebselektronik als auch das ggfs. angeschlossene Feldgerät mit elektrischer Energie aus der Versorgungsspannung betrieben werden, während in einem zweiten Betriebsmodus nur die Betriebselektronik versorgt wird und die Versorgung des Feldgeräts mit elektrischer Energie unterbrochen wird.

In einer weiteren Ausführungsform der Funkeinheit weist die Betriebselektronik eine Kommunikationsschnittstelle auf, die in dem Fall, dass sich die Versorgungsspannung ändert, insbesondere in dem Fall, dass sich die Versorgungsspannung von dem ersten Wert auf den zweiten Wert ändert, dazu dient, ein entsprechendes Funksignal abzusetzen. Das Funksignal kann bspw. Diagnoseinformationen bspw. betreffend den Zustand der Spannungsversorgung und eine verbleibende Restlaufzeit der Funkeinheit mit Energie aus dem Energiespeicher beinhalten.

In einer weiteren Ausführungsform der Funkeinheit dient die Funkeinheit zum Speisen wenigstens eines an die Funkeinheit anschließbaren Feldgerätes. Wie bereits erwähnt, sind derartige Funkeinheiten, an die ein Feldgerät anschließbar ist und über welche Funkeinheiten das Feldgerät mit elektrischer Energie versorgt werden, aus dem Stand der Technik, wie bspw., der Offenlegungsschrift DE 102004020393 A1, bekannt geworden. Dabei sind verschiedene Anschlusskonfigurationen des Feldgerätes an die Funkeinheit bspw. über eine universelle Schnittstelle, wie sie in der DE 102008036967 A1 beschrieben sind, möglich.

Die bezüglich der Versorgungsschaltung und der Funkeinheit genannten Ausführungsformen sind analog auf das vorgeschlagene Verfahren anwendbar.

Die Erfindung wird anhand der Zeichnung näher erläutert. Es zeigt:

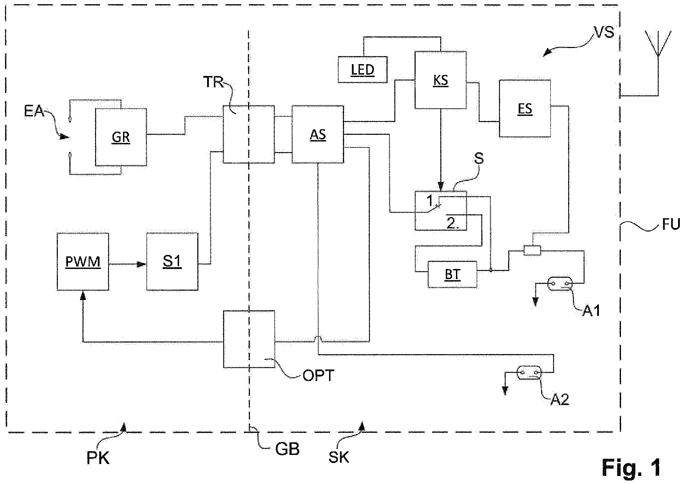

Fig. 1 : eine schematische Darstellung des Aufbaus einer Versorgungsschaltung gem. einer Ausführungsform der vorgeschlagenen Erfindung.

Über Eingangsanschlüsse EA ist die Versorgungsschaltung VS an eine Spannungsquelle, nicht gezeigt, anschließbar. Die Versorgungsschaltung VS ist dabei vorzugsweise in eine Funkeinheit, die an wenigstens ein Feldgerät anschließbar ist, integriert. Die Versorgungsschaltung kann aber auch in andere elektrische und/oder elektronische Geräte, wie bspw. in ein Feldgerät, d.h. einen Sensor, Aktor oder eine andere prozessnahe Komponente, integriert werden. Bei der Spannungsquelle kann es sich bspw. um eine Wechselspannungsquelle handeln. Bei der Spannungsquelle handelt es sich bspw. um einen Netzanschluss mit 230V und 50 Hz. Ferner kann bspw. ein Gleichrichter GR mit den Eingangsanschlüssen EA verbunden sein, um eine ggfs anliegende Wechselspannung in eine Gleichspannung zu wandeln.

Ferner weist die Versorgungsschaltung VS zwei Ausgänge A1, A2 auf, über die eine erste und eine zweite Versorgungsspannung abgegriffen werden können. Die erste Versorgungsspannung dient dabei zum Betreiben der Betriebselektronik BE und die zweite Versorgungsspannung zum Betreiben eines separat an die Funkeinheit anschließbaren Feldgerätes oder eines Bussystems wie bspw. eines HART-Bussystems. Feldgerät und/oder Feldbussystem sind dabei bspw. über Anschlussklemmen mit der Funkeinheit und der Versorgungsschaltung VS verbindbar.

Es ist aber auch möglich ein Feldgerät das an die Funkeinheit anschließbar ist mit elektrischer Energie über die Betriebselektronik also vermittels der ersten Versorgungsspannung zu speisen. Zu diesem Zweck kann die Betriebselektronik weitere Ausgänge, nicht gezeigt, aufweisen, an die ein Feldgerät angeschlossen und mit elektrischer Energie versorgt werden kann. An dem zweiten Ausgang A2 kann bspw. eine zweite Versorgungsspannung von 24 V ausgegeben werden, während an dem ersten Ausgang ein erster oder ein zweiter oder ein dritter Wert der ersten Versorgungsspannung von bspw. 10 V, 11 V oder 12 V für die Betriebselektronik BE ausgegeben werden kann. Die erste Versorgungsspannung kann somit unterschiedliche Werte annehmen. In Abhängigkeit dieser verschiedenen Werte schaltet die Betriebselektronik BE der Funkeinheit FU bspw. in verschiedene Betriebsmodi oder setzt ein oder mehrere Funksignale ab.

Zur Aufladung des Energiespeichers ES kann eine entsprechende Steuereinheit KS dienen. Zusätzlich kann zur Signalisierung der verschiedenen Zustände wie bspw. "Energiespeicher ES wird geladen", "Energiespeicher ES wird entladen" oder "Energiespeicher ES ist voll" etc. eine Signalisierungseinrichtung LED wie bspw. eine Light Emitting Diode verwendet werden, die bspw. ebenfalls an die Steuereinheit KS angeschlossen ist.

Im fehlerfreien Betrieb ist der Schalter S in der Stellung 1, so dass die von dem Transformator TR ausgegebene erste Versorgungsspannung von bspw. 12 V direkt auf den ersten Ausgang A1 gegeben wird. Im Fall einer Unterbrechung der Versorgung durch die Spannungsquelle über die Anschlüsse EA wird der Energiespeicher entladen und stellt eine Spannung von bspw. 10 V zur Verfügung. Da bspw. in einem Ex-Bereich nur eine begrenzte Leistung zur Verfügung steht, ist ein schnelles (Wieder-)Aufladen des Energiespeichers ES und gleichzeitiges Versorgen eines ggfs. an die Funkeinheit angeschlossenen Feldgerätes nicht möglich. Wird der Energiespeicher also geladen, so schaltet der Schalter S in die Stellung 2. Dann wird der Energiespeicher ES geladen und jedoch bspw. nur 11 V am ersten Ausgang A1 zur Verfügung gestellt. Zu diesem Zweck kann ein Spannungswandler BT vorgesehen sein.

Die Versorgungsschaltung VS gem. dem Ausführungsbeispiel in Figur 3 weist ferner eine galvanische Trennung GB zwischen Eingangsstromkreis PK und Ausgangsstromkreis SK auf. Zu diesem Zweck weist die Versorgungsschaltung VS einen Transformator TR und einen Optokoppler OPT auf.

Der Energiespeicher ES der Versorgungsschaltung kann im Fall einer Unterbrechung der Netzspannung so ausgelegt sein, dass zumindest das Funknetzwerk, d.h. die Funkverbindung über die Funkeinheit noch für einen vorgegebenen Zeitraum bspw. von ca. 30 min aufrecht erhalten bleibt. In diesem Zeitraum können Instandhaltungsinformationen oder Notsignale abgesetzt werden.

Zudem muss in dem Fall, dass die Versorgungsspannung aus dem Energiespeicher abgeleitet wird, das ggfs. an die Funkeinheit angeschlossene Feldgerät ausgeschaltet werden, um Energie zu sparen. Zu diesem Zweck kann die Versorgungsschaltung also entsprechende Informationen in Form des bereitgestellten Werts der Versorgungsspannung ausgeben.

Dabei können bspw. die Zustände "Versorgung ist in Ordnung (gem. Vorgabe)", "Versorgung ist in Ordnung und Energiespeicher wird geladen" und "Versorgung ist ausgefallen, Speisung aus dem Energiespeicher" vermittels unterschiedlicher Werte der Versorgungsspannung bspw. 10 V, 11 V bzw. 12 V signalisiert werden. Diese Werte der Versorgungsspannung können bspw. vermittels einer Detektionsschaltung in der Betriebselektronik gemessen werden. Anhand des derart bestimmten Werts der Versorgungsspannung können dann unterschiedliche Betriebsmodi der Betriebselektronik eingestellt werden. Bspw. kann ein ggfs. angeschlossenes Feldgerät ausgeschaltet werden oder eine Warnung oder eine Entwarnung über die Kommunikationsschnittstelle der Funkeinheit gesendet werden.

### Bezugszeichenliste

- EA: Eingangsanschlüsse
- PK: Primärkreis
- SK: Sekundärkreis
- GB: Galvanische Trennung
- GR: Gleichrichter
- TR: Transformator
- PWM: Steuereinheit zur Pulsweitenmodulation
- S1: erste Schalteinheit
- AS: Ausgangsschaltung
- OPT: Optokopppler
- LED: Anzeigeinheit/LED
- KS: Steuereinheit
- ES: Energiespeicher
- S: Schalter, mit Stellung 1. und Stellung 2.
- BT: Spannungswandler

## Patentansprüche

1. Anordnung umfassend eine elektrische Versorgungsschaltung (VS) und eine Betriebselektronik,
wobei die Versorgungsschaltung dazu dient, einen ersten im Wesentlichen konstanten Wert oder einen davon unterschiedlichen zweiten im Wesentlichen konstanten Wert einer Versorgungsspannung zur Verfügung zu stellen, welche Versorgungsspannung dazu dient, die Betriebselektronik zu betreiben, wobei die Versorgungsschaltung dazu dient, den ersten Wert der Versorgungsspannung auszugeben, wenn die Versorgungsspannung aus einer ersten Spannungsquelle (EA) abgeleitet wird,
und wobei die Versorgungsschaltung (VS) dazu dient, den zweiten Wert der Versorgungsspannung auszugeben, wenn die Versorgungsspannung aus einer zweiten Spannungsquelle (ES) abgeleitet wird,
**dadurch gekennzeichnet,**
**dass** eine Detektionsschaltung in der Betriebselektronik vorgesehen ist, die dazu dient, den Wert der Versorgungsspannung zu messen.

2. Anordnung nach Anspruch 1,
wobei die Betriebselektronik einen ersten und einen zweiten Betriebsmodus aufweist, und
wobei die Betriebselektronik in Abhängigkeit davon, ob die Versorgungsspannung den ersten oder den zweiten Wert aufweist den ersten bzw. den zweiten Betriebsmodus einstellt.

3. Anordnung nach Anspruch 1 oder 2,
wobei es sich bei der ersten Spannungsquelle um eine Netzspannung handelt.

4. Anordnung nach Anspruch 1, 2 oder 3,
wobei die Versorgungsschaltung (VS) einen, insbesondere aufladbaren, Energiespeicher (ES) umfasst, welcher Energiespeicher (ES) die zweite Spannungsquelle bildet,
wobei der Energiespeicher (ES) dazu dient, im Fall einer Unterbrechung der Spannungsversorgung aus der ersten Spannungsquelle, den zweiten Wert der Ausgangsspannung auszugeben.

5. Anordnung nach einem der vorherigen Ansprüche,
wobei der erste Wert der Versorgungsspannung und der zweite Wert der Versorgungsspannung von einem Ausgang (A1) der Versorgungsschaltung abgreifbar sind und sich der erste Wert der Versorgungsspannung vom zweiten Wert der Versorgungsspannung unterscheidet.

6. Anordnung nach Anspruch 4, wobei die Versorgungsschaltung dazu dient, einen dritten Wert der Versorgungsspannung, der sich von dem ersten und dem zweiten Wert der Versorgungsspannung unterscheidet, auszugeben, wenn der Energiespeicher (ES) über die erste Spannungsquelle (EA) aufgeladen wird.

7. Anordnung nach einem der vorherigen Ansprüche, wobei die Versorgungsschaltung (VS) in eine Funkeinheit, die an wenigstens ein Feldgerät anschließbar ist, integriert ist.

8. Anordnung nach einem der vorherigen Ansprüche, wobei die Versorgungsschaltung in ein Feldgerät, insbesondere in einen Sensor, einen Aktor, oder eine andere prozessnahe Komponente, integriert ist.

9. Funkeinheit für eine Anlage der Prozessautomatisierungstechnik,
wobei die Funkeinheit eine Anordnung nach wenigstens einem der Ansprüche 1-6 umfasst, wobei die Versorgungsschaltung (VS) ein Netzteil zum Anschließen an ein Stromnetz (EA) und einen Energiespeicher (ES) umfasst, und die Versorgungsschaltung (VS) in Abhängigkeit davon, ob die Spannungsversorgung über das Netzteil oder den Energiespeicher (ES) erfolgt, den ersten oder zweiten Wert der Versorgungsspannung ausgibt.

10. Funkeinheit nach dem vorherigen Anspruch,
wobei die Betriebselektronik dazu dient, den Wert der Versorgungsspannung zu erfassen.

11. Funkeinheit nach dem vorherigen Anspruch,
wobei die Betriebselektronik dazu dient, in Abhängigkeit des Werts der Versorgungsspannung einen ersten bzw. einen zweiten Betriebsmodus der Betriebselektronik einzustellen.

12. Funkeinheit nach einem der Ansprüche 10 oder 11,
wobei die Betriebselektronik eine Kommunikationsschnittstelle aufweist und in dem Fall, dass sich die Versorgungsspannung ändert, insbesondere in dem Fall, dass sich die Versorgungsspannung von dem ersten Wert auf den zweiten Wert ändert, dazu dient, ein entsprechendes Funksignal abzusetzen.

13. Funkeinheit nach einem der Ansprüche 9 bis 12,
wobei die Funkeinheit zum Speisen wenigstens eines an die Funkeinheit anschließbaren Feldgerätes dient.

14. Verfahren zum Bereitstellen einer Versorgungsspannung,
vermittels welcher Versorgungsspannung eine Betriebselektronik betrieben wird,
wobei ein erster im Wesentlichen konstanter Wert einer Versorgungsspannung ausgegeben wird, wenn die Versorgungsspannung aus einer ersten Spannungsquelle abgeleitet wird,
wobei ein zweiter im Wesentlichen konstanter Wert einer Versorgungsspannung ausgegeben wird, wenn die Versorgungsspannung aus einer zweiten Spannungsquelle abgeleitet wird,
wobei sich der erste und der zweite Wert der Versorgungsspannung voneinander unterscheiden,
**dadurch gekennzeichnet,**
**dass** der erste Wert der Versorgungsspannung oder der zweite Wert der Versorgungsspannung vermittels einer Detektionsschaltung in der Betriebselektronik gemessen werden.

## Claims

1. Arrangement comprising an electric power supply circuit (VS) and an operating electronics system,
wherein the power supply circuit is used to make available a first essentially constant value and a second essentially constant value of a supply voltage, which differs from the first value, said supply voltage being used to operate the operating electronics system, wherein the power supply circuit is used to output the first value of the supply voltage if the supply voltage is derived from a first voltage source (EA),
and wherein the power supply circuit (VS) is used to output the second value of the supply voltage if the supply voltage is derived from a second voltage source (ES),
**characterized in that**
a detection circuit is provided in the operating electronics system that is used to measure the value of the supply voltage.

2. Arrangement as claimed in Claim 1,
wherein the operating electronics system has a first and a second operating mode, and
wherein the operating electronics system sets the first or the second operating mode depending on whether the supply voltage has the first value or the second value.

3. Arrangement as claimed in Claim 1 or 2,
wherein the first voltage source is a mains voltage.

4. Arrangement as claimed in Claim 1, 2 or 3,
wherein the power supply circuit (VS) comprises an energy storage unit (ES), particularly rechargeable, said energy storage unit (ES) constituting the second voltage source,
wherein the energy storage unit (ES) is used to output the second value of the output voltage in the event of a failure of the power supply from the first voltage source.

5. Arrangement as claimed in one of the previous claims,
wherein the first value of the supply voltage and the second value of the supply voltage can be captured from an output (A1) of the power supply circuit and wherein the first value of the supply voltage differs from the second value of the supply voltage.

6. Arrangement as claimed in Claim 4, wherein the power supply circuit is used to output a third value of the supply voltage, which is different from the first and second value of the supply voltage, if the energy storage unit (ES) is being charged via the first voltage source (EA).

7. Arrangement as claimed in one of the previous claims, wherein the power supply circuit (VS) is integrated into a radio unit which can be connected to at least one field device.

8. Arrangement as claimed in one of the previous claims, wherein the power supply circuit is integrated in a field device, particularly in a sensor, an actuator, or another component close to the process.

9. Radio unit for a process automation technology system, wherein the radio unit comprises an arrangement as claimed in at least one of the Claims 1 to 6, wherein the power supply circuit (VS) comprises a power supply unit for connection to an electricity network (EA) and an energy storage unit (ES), and the power supply circuit (VS) outputs the first or the second value of the supply voltage depending on whether power is supplied from the power supply unit or from the energy storage unit (ES).

10. Radio unit as claimed in the previous claim,
wherein the operating electronics system is used to detect the value of the supply voltage.

11. Radio unit as claimed in the previous claim,
wherein the operating electronics system is used to set a first or a second operating mode of the operating electronics system depending on the value of the supply voltage.

12. Radio unit as claimed in one of the Claims 10 or 11,
wherein the operating electronics system has a communication interface and serves to send a corresponding radio signal in the event that the supply voltage changes, particularly in the event that the supply voltage changes from the first value to the second value.

13. Radio unit as claimed in one of the Claims 9 to 12,
wherein the radio unit is used to feed at least one field device that can be connected to the radio unit.

14. Procedure for providing a supply voltage by means of which an operating electronics system is operated,
wherein a first essentially constant value of a supply voltage is output if the supply voltage is derived from a first voltage source,
wherein a second essentially constant value of a supply voltage is output if the supply voltage is derived from a second voltage source,
wherein the first and the second value of the supply voltage are different from one another,
**characterized in that**
the first value of the supply voltage or the second value of the supply voltage are measured by means of a detection circuit in the operating electronics system.

## Revendications

1. Agencement comprenant un circuit d'alimentation électrique (VS) et un système électronique,
pour lequel le circuit d'alimentation sert à mettre à disposition une première valeur pour l'essentiel constante ou une deuxième valeur pour l'essentiel constante, différente de la première valeur, d'une tension d'alimentation,
laquelle tension d'alimentation sert à exploiter le système électronique,
le circuit d'alimentation (VS) servant à délivrer la première valeur de la tension d'alimentation lorsque la tension d'alimentation est prélevée à partir d'une première source de tension (EA),
et le circuit d'alimentation (VS) servant à délivrer la deuxième valeur de la tension d'alimentation lorsque la tension d'alimentation est prélevée à partir d'une deuxième source de tension (ES),
**caractérisé**
**en ce qu'**est prévu un circuit de détection, qui sert à mesurer la valeur de la tension d'alimentation.

2. Agencement selon la revendication 1,
pour lequel le système électronique présente un premier et un deuxième mode de fonctionnement, et
pour lequel le système électronique règle le premier ou le deuxième mode de fonctionnement selon que la tension d'alimentation présente la première ou la deuxième valeur.

3. Agencement selon la revendication 1 ou 2,
pour lequel il s'agit, concernant la première source de tension, d'une tension de réseau.

4. Agencement selon la revendication 1, 2 ou 3,
pour lequel le circuit d'alimentation (VS) comprend un accumulateur d'énergie (ES), notamment rechargeable, lequel accumulateur d'énergie (ES) constitue la deuxième source de tension,
pour lequel l'accumulateur d'énergie (ES) sert, en cas d'interruption de la tension d'alimentation issue de la première source de tension, à délivrer la deuxième valeur de la tension de sortie.

5. Agencement selon l'une des revendications précédentes,
pour lequel la première valeur de la tension d'alimentation et la deuxième valeur de la tension d'alimentation peuvent être prélevées à partir d'une sortie (A1) du circuit d'alimentation, et pour lequel la première valeur de la tension d'alimentation se distingue de la deuxième valeur de la tension d'alimentation.

6. Agencement selon la revendication 4, pour lequel le circuit d'alimentation sert à délivrer une troisième valeur de la tension d'alimentation, qui se distingue de la première et de la deuxième valeur de la tension d'alimentation, lorsque l'accumulateur d'énergie (ES) est chargé via la première source de tension (EA).

7. Agencement selon l'une des revendications précédentes,
pour lequel le circuit d'alimentation (VS) est intégré dans une unité radio, qui peut être raccordée à au moins un appareil de terrain.

8. Agencement selon l'une des revendications précédentes,
pour lequel le circuit d'alimentation est intégré dans un appareil de terrain, notamment dans un capteur, un actionneur, ou un autre composant proche du process.

9. Unité radio destinée à une installation de la technique d'automatisation des process, l'unité radio comprenant un arrangement selon au moins l'une des revendications 1 à 6, le circuit d'alimentation (VS) comprenant un bloc d'alimentation pour le branchement à un réseau électrique (EA) et un accumulateur d'énergie (ES), et le circuit d'alimentation (VS) émettant la première ou la deuxième valeur de la tension d'alimentation selon que la tension d'alimentation est générée via le bloc d'alimentation ou via l'accumulateur d'énergie (ES).

10. Unité radio selon la revendication précédente,
pour laquelle le système électronique sert à détecter la valeur de la tension d'alimentation.

11. Unité radio selon la revendication précédente,
pour laquelle le système électronique sert à régler, en fonction de la valeur de la tension d'alimentation, un premier ou un deuxième mode de fonctionnement du système électronique.

12. Unité radio selon l'une des revendications 10 ou 11,
pour laquelle le système électronique comporte une interface de communication et, dans le cas où la tension d'alimentation change, notamment dans le cas où la tension d'alimentation change de la première valeur à la deuxième valeur, sert à envoyer un signal radio correspondant.

13. Unité radio selon l'une des revendications 9 à 12,
pour laquelle l'unité radio sert à l'alimentation d'au moins un appareil de terrain raccordable à l'unité radio.

14. Procédé destiné à la mise à disposition d'une tension d'alimentation, au moyen de laquelle un système électronique est exploité,
pour lequel une première valeur, pour l'essentiel constante, d'une tension d'alimentation est délivrée lorsque la tension d'alimentation est prélevée d'une première source de tension,
pour lequel une deuxième valeur, pour l'essentiel constante, d'une tension d'alimentation est délivrée lorsque la tension d'alimentation est prélevée d'une deuxième source de tension,
pour lequel la première et la deuxième valeur de la tension d'alimentation se sont différentes l'une de l'autre,
**caractérisé**
**en ce que** la première valeur de la tension d'alimentation ou la deuxième valeur de la tension d'alimentation est mesurée au moyen d'un circuit de détection intégré dans le système électronique.
